Europäisches Patentamt

European Patent Office

Office européen des brevets

(11) Veröffentlichungsnummer: **0 210 572**
**A1**

(12) # EUROPÄISCHE PATENTANMELDUNG

(21) Anmeldenummer: 86110015.4

(22) Anmeldetag: 21.07.86

(51) Int. Cl.⁴: **B23P 21/00**

(30) Priorität: 24.07.85 DE 3526524

(43) Veröffentlichungstag der Anmeldung:
04.02.87 Patentblatt 87/06

(84) Benannte Vertragsstaaten:
AT BE CH DE FR GB IT LI LU NL SE

(71) Anmelder: **Kumeth, Siegmund**
**Bayreuther Strasse 37**
**D-8450 Amberg(DE)**

(72) Erfinder: **Kumeth, Siegmund**
**Bayreuther Strasse 37**
**D-8450 Amberg(DE)**

(74) Vertreter: **Graf, Helmut, Dipl.-Ing. et al**
**Patentanwälte Dipl.-Ing. A. Wasmeier**
**Dipl.-Ing. H. Graf Greflinger Strasse 7**
**Postfach 382**
**D-8400 Regensburg(DE)**

(54) **Vorrichtung zum automatischen Montieren von Werkstücken oder Werkstückteilen sowie Verfahren zur Steuerung einer solchen Vorrichtung.**

(57) Die Erfindung bezieht sich auf eine Vorrichtung zum automatischen Montieren von Werkstücken oder Werkstückteilen aus Bauteilen oder Bauelementen, bestehend aus einer Montageeinheit, die wenigstens einen in seiner Funktion und Bewegung programmgesteuerten Werkzeugträger mit wenigstens einem Montagewerkzeug aufweist, mit welchem die Bauteile an der Montageeinheit endenden und mit jeweils einem Vorrat für Bauteile gleicher Art in Verbindung stehenden Zuführungen entnommen und zu dem Werkstück bzw. Werkstückteil montiert werden.

Die Erfindung ist gekennzeichnet durch wenigstens eine bewegbare und an die Montageeinheit ankuppelbare periphere Geräteeinheit, die die Zuführungen und Vorräte für die Bauteile aufweist, welche für die Montage eines bestimmten Werkstücks oder Werkstückteils erforderlich sind, sowie durch einen Antrieb für die periphere Geräteeinheit, mit dem diese Geräteeinheit selbsttätig aus einer Parkstellung mit räumlichem Abstand von der Montageeinheit durch eine Steuereinrichtung gesteuert in die an die Montageeinheit angekuppelte Arbeitsstellung bzw. aus dieser zurück in die Parkstellung bewegbar ist.

Fig.1

## Vorrichtung zum automatischen Montieren von Werkstücken oder Werkstückteilen sowie Verfahren zur Steuerung einer solchen Vorrichtung.

Die Erfindung bezieht sich zunächst auf eine Vorrichtung zum automatischen Montieren von Werkstücken oder Werkstückteilen aus Bauteilen oder Bauelementen gemäß Oberbegriff Patentanspruch 1.

Zum automatischen Montieren von Werkstücken oder Werkstückteilen unterschiedlichster Art aus Bauelementen oder Bauteilen sind Montageeinrichtungen in den verschiedensten Arten bekannt, beispielsweise solche, bei denen ein Arbeitstisch schrittweise an verschiedenen Arbeitsstationen vorbeibewegt wird, an denen dann jeweils ein oder aber mehrere Montagevorgänge durchgeführt werden, und zwar unter Verwendung von Bauteilen oder Bauelementen, die den einzelnen Montagestationen von außen her über Zuführunen zugeführt werden. An einer als Entnahmestation ausgebildeten Arbeitsstation wird dann diesem Automaten das fertigmontierte Werkstück oder Werkstückteil entnommen. Diese bekannten Automaten haben den Nachteil, daß sie entweder nur für die Montage eines ganz bestimmten Werkstückes oder Werkstückteiles geeignet sind oder aber eine Umstellung der Produktion von einem bestimmten Werkstück oder Werkstückteil auf ein anderes Werkstück oder Werkstückteil nur mit einer sehr zeitraubenden Umrüstung des Montageautomaten möglich ist.

Bekannt sind weiterhin auch roboterartig ausgebildete Vorrichtung, bei denen das Montieren von Werkstücken oder Werkstückteilen mit Hilfe von Werkzeugen erfolgt, die an einem Werkzeugträger vorgesehen sind, mit dem das Montagewerkzeug in der für die Montage notwendigen Weise programmgesteuert bewegt und betätigt wird. Zumindest bei universellerer Ausbildung des Montagewerkzeuges ist es mit Vorrichtungen dieser Art möglich, unterschiedliche Werkstücke oder Werkstückteile durch Änderung des Programmes zu mon tieren, wobei allerdings bei vielen Anwendungsgebieten, bei denen die für die Herstellung eines bestimmten Werkstückes oder Werkstückteils benötigten Bauteile oder Bauelemente sich auch von der äußeren Form von solchen Bauelementen oder Bauteilen unterscheiden, die für die Montage eines andersartigen Werkstücks oder Werkstückteils benötigt werden, bei der Umstellung der Produktion auf eine gewisse manuelle Umrüstung der Vorrichtung (Austausch des Montagewerkzeugs sowie Austausch der Zuführungen für die Bauelemente an die den Werkzeugträger und das Montagewerkzeug aufweisende Montageeinheit) nicht verzichtet werden kann.

Der Erfindung liegt die Aufgabe zugrunde, eine Vorrichtung aufzuzeigen, bei der das Umstellen von einer Produktion auf eine andere Produktion selbsttätig, d.h. programmgesteuert erfolgen kann, so daß es insbes. wirtschaftlich auch möglich ist, kleinere Serien von Werkstücken oder Werkstückteilen automatisch zu montieren.

Zur Lösung dieser Aufgabe ist eine Vorrichtung gemäß dem kennzeichnenden Teil des Patentanspruches 1 ausgebildet.

Unter "Werkstück" oder "Werkstückteil" ist im Sinne der Erfindung jede Art von Produkt zu verstehen, welches unter Verwendung von einzelnen Bauteilen oder Bauelementen, die ihrerseits aus mehreren Einselteilen vormontiert sein können, zusammengebaut bzw. montiert wird.

Unter "Montagewerkzeug" ist im weitesten Sinne auch ein Prüfwerkzeug zu verstehen, mit welchem Prüfvorgänge (z.B. mechanischer oder elektrischer Art) an einem Bauelement oder Bauteil oder aber an einem der Vorrichtung zugeführten oder durch die Vorrichtung montierten Werkstück oder Werkstückteil durchgeführt werden.

In Weiterbildung bezieht sich die Erfindung auch auf ein Verfahren zur Steuerung einer Vorrichtung zum automatischen Montieren von Werkstücken oder Werkstückteilen, wie es - (Verfahren) im Patentanspruch 10 gekennzeichnet ist.

Die erfindungsgemäße Vorrichtung bzw. das erfindungsgemäße Verfahren zur Steuerung einer Vorrichtung zum automatischen Montieren von Werkstücken' oder Werkstückteilen haben den Vorteil, daß vollkommen selbsttätig, programmgesteuert von einem Produkt auf das andere Produkt umgestellt werden kann, und zwar dadurch, daß vor Aufnahme der Montage die für die Montage eines Produktes speziell benötigten Bauelemente oder Bauteile mit einer bestimmten peripheren Geräteeinheit selbsttätig an die Montageeinheit herangebracht werden, und zwar bevorzugt zusammen mit dem für den betreffenden Montagevorgang benötigten und an die betreffenden Bauelemente oder Bauteile angepaßten Montagewerkzeug, welches vor Beginn der Montage in einer Aufnahme der betreffenden peripheren Geräteeinheit bereitsteht und von dem Werkzeugträger zur Ankupplung an diesen programmgesteuert entnommen wird.

Selbstverständlich ist es auch möglich, daß die periphere Geräteeinheit mehrere Aufnahmen für mehrere Montagewerkzeuge aufweist, die dann, wenn verschiedene Werkzeuge für einen Montagevorgang benötigt werden, vom Werkzeugträger automatisch nacheinander entnommen und wieder an die zugehörigen Aufnahmen der peripheren Geräteeinheit zurückgegeben werden. Weiterhin bietet die Verwendung von mehreren Aufnahmen mit in diesen bereitstehenden Montagewerkzeugen auch den Vorteil, daß beispielsweise bei einem Defekt eines Montagewerkzeuges der Werkzeugträger dieses defekte Werkzeug vorzugsweise an eine Ablage für defekte Werkzeuge entweder an der Montageeinheit oder aber an der periupheren Geräteeinheit zurückgibt und dann der peripheren Geräteeinheit ein neues Montagewerkzeug selbsttätig entnimmt.

Weiterbildungen der Erfindung sind Gegenstand der Unteransprüche.

Die Erfindung wird im Folgenden anhand der Figuren an einem Ausführungsbeispiel näher erläutert. Es zeigen:

Fig. 1 in schematischer Darstellung und in Seitenansicht eine Vorrichtung gemäß der Erfindung; und

Fig. 2 eine Draufsicht auf die Vorrichtung gemäß Fig. 1.

In den Figuren ist 1 eine als Roboter ausgebildete Montageeinheit, die bei der dargestellten Ausführungsform u.a. einen Werkzeugträger 2 aufweist, an welchem ein Montagewerkzeug 3 ankuppelbar ist. Der Werkzeugträger 2 ist an einem von einem Schlitten 4 nach unten wegstehenden Arm 5 gehalten, und zwar derart, daß der Werkzeugträger 2 und mit diesem auch das Montagewerkzeug 3 um die vertikale Achse V beispielsweise um 360° drehbar, in Richtung der vertikalen Achse V auf- und abbewegbar sowie zusätzlich auch um eine horizontale, durch den Gelenkstift 6 angedeutete Achse um wenigstens 90° schwenkbar sind. Die für diese Bewegungen notwendigen Antriebs-und Steuerelemente sind am Schlitten 4 und/oder am Werkzeugträger 2 vorgesehen. Außerdem weist der Werkzeugträger 2 Mittel auf, um ein maschinelles bzw. automatisches Kuppeln bzw. Verbinden des Montagewerkzeugs 3 am Werkzeugträger 2 zu erhalten und um das Montagewerkzeug 3 zu betätigen.

Der Schlitten 4 ist bei der dargestellten Ausführungsform an einer horizontalen Führungsschiene 7 verschiebbar geführt, die ihrerseits an ihren beiden Enden mit Hilfe von Schlittenführungen an zwei parallel zueinander und im Abstand zueinander angeordneten horizontalen Führungsschienen 8 geführt ist, welche mit ihrer Längserstreckung senkrecht zur Längserstreckung der Führungsschiene 7 liegen und jeweils beidendig an einer vertikalen Säule 9 gehalten sind. Für die Verschiebung des Schlittens 4 entlang der Führungsschiene 7, d.h. in einer ersten horizontalen Achse, und für die Verschiebung der Führungsschiene 7 in Richtung der Längserstreckung der Führungsschienen 8, d.h. in einer zweiten, senkrecht zur ersten verlaufenden horizontalen Achse sind nicht näher dargestellte Antriebselemente vorgesehen.

Die insgesamt vier, an ihrem oberen Ende jeweils ein Ende einer Führungsschiene 8 tragenden Säulen 9 sind an ihrem unteren Ende auf einem Tisch 10 der Montageeinheit 1 befestigt.

Die Vorrichtung weist weiterhin mehrere periphere Geräteeinheiten 11a, 11b und 11c auf. Diese peripheren Geräteeinheiten sind jeweils fahrbar ausgebildet und weisen Räder 12 auf, von denen wenigstens ein Teil durch eine in der betreffenden Geräteeinheit 11a, 11b bzw. 11c vorgesehene Antriebseinrichtung angetrieben ist und von denen wenigstens die an einem Ende der betreffenden Geräteeinheit vorgesehenen Räder 12 durch einen entsprechenden, nicht dargestellten Steuermechanismus lenkbar sind.

Die peripheren Geräteeinheiten 11a, 11b und 11c weisen jeweils mehrere Vorräte bzw. Aufnahmebehälter für Bauteile 14, 15 und 16 auf. Diese Aufnahmebehälter sind bei der dargestellten Ausführungsform von Vibrationstöpfen 13 gebildet, von denen jeder Vibrationstopf 13 an einer Geräteeinheit zur Aufnahme von Bauteilen 14, 15 bzw. 16 einer bestimmten Art dient, wobei die Bauteile 14, 15 und 16 unterschiedlich sind und zur Montage eines bestimmten Werkstücks bzw. eines bestimmten Werkstückteils benötigt werden. Die Vibrationstöpfe 13 stehen jeweils mit einem Ende einer Fördereinrichtung in Verbindung, die bei der dargestellten Ausführungsform von einem Linearförderer 17 gebildet ist. Jeder Linearförderer 17 reicht mit seinem dem zugehörigen Vibrationstopf 13 entfernt liegenden Ende bis in den Bereich der Vorderseite 18 der betreffenden peripheren Geräteeinheit 11a, 11b, 11c oder steht über diese Vorderseite geringfügig vor.

In dem Boden 19, auf welchem die Geräteeinheiten 11a -11c mit ihren Rädern 12 fahrbar angeordnet sind, ist ein Netz von Induktionsschleifen 20 verlegt, über die die einzelnen peripheren Geräteeinheiten 11a -11c bzw. deren Funktionen ansteuerbar sind. Die Ansteuerung der peripheren Geräteeinheiten 11a -11c kann auch auf andere Weise z.B. durch Fernsteuerung mit Hilfe von elektromagnetischen Wellen, durch Infrarot-Steuerungen usw. erfolgen. Sofern die peripheren Geräteeinheiten 11a -11c keine eigenen Energiequellen (beispielsweise in Form von aufladbaren Batterien) zumindest für die Fahr-und/oder Lenkfunktionen aufweisen, sind diese Geräteeinheiten über entsprechende Zuführungen (beispilsweise über aufwickelbare Kabel bzw. Verbindungsleitungen 21 mit äußeren Stromquellen verbunden. Über diese Verbindungsleitungen kann dann zumindest auch einTeil der Funktionen der peripheren Geräteeinheiten 11a -11c gesteuert werden.

Jede periphere Geräteeinheit 11a -11c ist mit Hilfe von Stiften 22 beispielsweise an der Geräteeinheit und zugehörigen Ausnehmungen oder Aufnahmen 23 für die Stifte 22 beispielsweise an der Montageeinheit 1 an diese derart ankuppelbar, daß jede an die Montageeinheit 1 angekuppelte periphere Geräteeinheit 11a -11c nach dem Ankuppeln, d.h. in Arbeitsstellung, eine genau vorgegebene Positionierung bezüglich der Montageeinheit 1 bzw. deren Elemente aufweist, wobei die den Vibrationstöpfen 13 entfernt liegenden Enden der Linearförderer 17 dann an einem Rand des Tisches 10 so angeordnet sind, daß diese Enden bzw. die an diese Enden geförderten Bauteile 14, 15 und 16 für das am Werkzeugträger 2 vorgesehene Montagewerkzeug zugänglich sind.

Zusätzlich zu den Stiften bzw. Indexstiften 22 und den zugehörigen Aufnahmen 23 können auch noch an der Montageeinheit 1 und an den peripheren Geräteeinheiten 11a -11c Kupplungselemente vorgesehen sein, die bei einer in Arbeitsstellung befindlichen peripheren Geräteeinheit eine Verbindung zwischen der Montageeinheit und der in Arbeitsstellung befindlichen peripheren Geräteeinheit herstellen, um beispeilsweise Steuersignale usw. zwischen beiden Teilen der Vorrichtung zu übertragen.

Eine Besonderheit der dargestellten Vorrichtung besteht darin, daß jede periphere Geräteeinheit 11a - 11c weiterhin eine Aufnahme 24 zur Ablage des für die Verarbeitung der Bauteile 14, 15 und 16 geeigneten Montagewerkzeugs 3 aufweist, d.h. mit jeder peripheren Geräteeinheit 11a -11c werden nicht nur die für die Herstellung bzw. Montage eines bestimmten Werkstückes benötigten Bauteile, sondern auch das für diese Montage benötigte und auf die Bauteile abgestimmte Montagewerkzeug 3 an die Montageeinheit 1 herangebracht.

Die Steuerung der Montageeinheit und deren Elemente sowie die Steuerung der einzelnen peripheren Geräteeinheiten 11a -11c erfolgt durch eine zentrale Steuereinrichtung 25 nach festen oder frei programmierbaren Programmen. Im einzelnen läßt sich die Arbeitsweise der Vorrichtung, wie folgt, beschrieben:

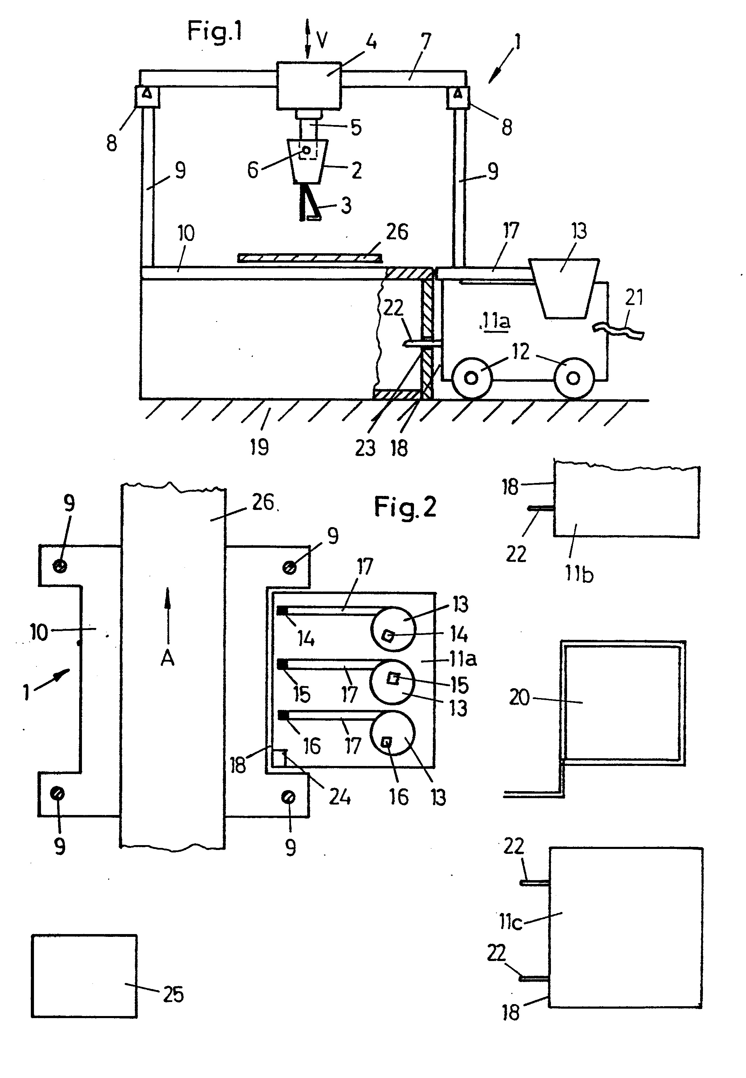

Zunächst befinden sich sämtliche peripheren Geräteeinheiten 11a - 11c in einer Parkstellung in räumlichem Abstand von der Montageeinheit 1, wie dies in der Fig. 2 für die Geräteeinheit 11b und 11c angedeutet ist.

Soll nun ein bestimtes Werkstück montiert werden, so wird zunächst (gesteuert durch die Steuerinrichtung 25) die Geräteeinheit, beispielsweise die Geräteeinheit 11a, die die für die Montage des betreffenden Werkstückes erforderlichen Bauteile 14 -16 aufweist, selbsttätig an die Montageeinheit 1 herangefahren und an diese Montageeinheit mit Hilfe der Stifte 22 und der zugehörigen Aufnahmen 23 angekuppelt. Durch einen entsprechenden, von der Steuereinrichtung 25 ebenfalls erzeugten Steuerbefehl wird dann der Werkzeugträger 2 so bewegt, daß dieser sich zunächst selbsttätig von der Aufnahme 24 das mit der Geräteeinheit 11a herangeführte Montagewerkzeug 3 holt, d.h. das Montagewerkzeug 3 wird an dem Werkzeugträger 2 angekuppelt. Nach dem Einschalten der Vibrationstöpfe 13 und Linearförderer 17 kann mit der Montage des Werkstückes begonnen werden, wofür der Werkzeugträger 2 mit Hilfe des Montagewerkzeuges 3 von den am Rand des Tisches 10 liegenden Enden der Linearförderer 17 die dort bereitstehenden Bauelemente 14 -16 gesteuert durch die Steuereinrichtung 25 entnimmt und beispielsweise im mittleren Bereich des Tisches 10 bzw. im Bereich einer dort vorgesehenen Fördereinrichtung 26 zu dem Werkstück montiert. Die Fördereinrichtung 26 kann zu diesem Zweck an ihrer Oberseite Aufnahmen oder Halterungen aufweisen. Nach der Fertigstellung eines Werkstückes wird dieses mit Hilfe der Fördereinrichtung 26 weggeführt, so daß dann mit der Montage des nächsten Werkstückes begonnen werden kann.

Soll die Produktion nun auf eine andere Art von Werkstücken umgestellt werden, so gibt der Werkzeugträger 2 gesteuert durch ein Steuersignal der Steuereinrichtung 25 zunächst das Montagewerkzeug 3 an die Aufnahme 24 zurück. Anschließend wird auch die periphere Geräteeinheit 11a automatisch in die Parkstellung zurückgefahren, so daß eine andere Geräteeinheit 11b oder 11c an die Montageeinheit 1 gesteuert durch die Steuereinrichtung 25 bzw. die im Boden 19 verlegten Induktionsschleifen 20 oder andere geeignete Steuer-oder Leiteinrichtungen herangeführt und in Arbeitsposition gebracht werden kann. Auch diese neue, in Arbeitsstellung befindliche Geräteeinheit 11b bzw. 11c weist auf ihrer Aufnahme 24 wiederum das zur Montage der betreffenden Bauteile geeignete Montagewerkzeug auf, welches in der oben beschriebenen Weise zunächst von dem Werkzeugträger 2 aufgenommen bzw. an diesen angekuppelt wird.

Die Erfindung wurde voranstehend an einem Ausführungsbeispiel beschrieben. Es versteht sich, daß zahlreiche Änderungen sowie Abwandlungen möglich sind, ohne daß dadurch der der Erfindung zugrundeliegende Erfindungsgedanke verlassen wird. So ist es beispielsweise grundsätzlich möglichd, daß an zwei oder mehreren Seiten der Montageeinheit 1 mehrere periphere Geräteeinheiten in Parkstellung angeordnet sind, die dann jeweils an die Montageeinheit selbsttätig ankuppelbar sind, wobei es grundsätzlich auch möglich ist, daß zur Herstellung eines bestimmten Werkstückes die Bauteile von dem Montagewerkzeug 3 aus zwei oder mehreren, an die Montageeinheit 1 gleichzeitig angekuppelten peripheren Geräteeinheiten entnommen werden. Weiterhin ist es grundsätzlich möglich, daß der Werkzeugträger 2 so ausgebildet ist, daß an ihm mehrere Montagewerkzeuge 3 gleichzeitig gehalten sind, die dann jeweils durch entsprechendes Drehen oder eine andere Bewegung des Werkzeugträgers 2 in die Arbeitsstellung gebracht werden, wobei sämtliche Montagewerkzeuge 3 oder aber nur ein Teil dieser Montagewerkzeuge, die speziell auf die Verarbeitung der Bauteile einer entsprechenden peripheren Geräteeinheit angepaßt sind, an diese Einheit nach Beendigung des Montagevorganges und vor dem Rückbewegen der Geräteeinheit in die Parkstellung zurückgegeben werden.

**Ansprüche**

1. Vorrichtung zum automatischen Montieren von Werkstücken oder Werkstückteilen aus Bauteilen oder Bauelementen, bestehend aus einer Montageeinheit, die wenigstens einen in seiner Funktion und Bewegung programmgesteuerten Werkzeugträger mit wenigstens einem Montagewerkzeug aufweist, mit welchem die Bauteile an der Montageeinheit endenden und mit jeweils einem Vorrat für Bauteile gleicher Art in Verbindung stehenden Zuführungen entnommen und zu dem Werkstück bzw. Werkstückteil montiert werden, **gekennzeichnet durch** wenigstens eine bewegbare und an die Montageeinheit (1) ankuppelbare periphere Geräteeinheit (11a, 11b, 11c), die die Zuführungen (17) und Vorräte (13) für die Bauteile (14, 15, 16) aufweist, welche für die Montage eines bestimmten Werkstücks oder Werkstückteils erforderlich sind, sowie durch einen Antrieb für die periphere Geräteeinheit (11a, 11b, 11c), mit dem diese Geräteeinheit selbsttätig aus einer Parkstellung mit räumlichem Abstand von der Montageeinheit (1) durch eine Steuereinrichtung (25) gesteuert in die an die Montageeinheit (1) angekuppelte Arbeitsstellung bzw. aus dieser zurück in die Parkstellung bewegbar ist.

2. Vorrichtung nach Anspruch 1, dadurch gekennzeichnet, daß der Werkzeugträger (2) sowie die wenigstens eine periphere Geräteeinheit (11a, 11b, 11c) durch eine gemeinsame Steuereinrichtung (25) steuerbar sind.

3. Vorrichtung nach Anspruch 1 oder 2, dadurch gekennzeichnet, daß die wenigstens eine periphere Geräteeinheit (11a, 11b, 11c) wenigstens eine Aufnahme (24) für das wenigstens eine Montagewerkzeug (3) aufweist.

4. Vorrichtung nach einem der Ansprüche 1 -3, dadurch gekenn zeichnet, daß die Vorrichtung wenigstens zwei periphere Geräteeinheiten (11a, 11b, 11c) besitzt.

5. Vorrichtung nach einem der Ansprüche 1 -4, dadurch gekennzeichnet, daß die wenigstens eine periphere Geräteeinheit (11a, 11b, 11c) Rollen oder Räder aufweist, von denen wenigstens ein Teil mit einer an der peripheren Geräteeinheit (11a, 11b, 11c) vorgesehenen Antriebseinheit angetrieben ist.

6. Vorrichtung nach einem der Ansprüche 1 -5, dadurch gekennzeichnet, daß die wenigstens eine periphere Geräteeinheit (11a, 11b, 11c) Rollen oder Räder (12) aufweist, von denen wenigstens ein Teil mit Hilfe einer einen Antrieb aufweisenden und in der peripheren Geräteeinheit vorgesehenen Steuereinrichtung lenkbar ist.

7. Vorrichtung nach einem der Ansprüche 1 -6, dadurch gekennzeichnet, daß die wenigstens eine periphere Geräteeinheit (11a, 11b, 11c) in ihren Funktionen durch Fernsteuerung, beispielsweise durch elektromagnetische Wellen, Infrarot-Licht oder durch vorzugsweise im Boden (19) verlegte Induktionsschleifen (20) fernsteuerbar ist.

8. Vorrichtung nach einem der Ansprüche 1 -7, dadurch gekennzeichnet, daß die Zuführungen für die Bauelemente (14, 15, 16) an der wenigstens einen peripheren Geräteeinheit (11a, 11b, 11c) zumindest teilweise von Fördereinrichtungen, vorzugsweise von Linearförderern (17) gebildet sind, die (Fördereinrichtungen) jeweils mit einem Vorrat, vorzugsweise mit einem Vibrationstopf (13) in Verbindung stehen.

9. Vorrichtung nach einem der Ansprüche 1 -7, dadurch gekennzeichnet, daß die Vorräte für die Bauelemente (14, 15, 16) an der wenigstens einen peripheren Geräteeinheit (11a, 11b, 11c) wenigstens teilweise von Magazinen zur Aufnahme der Bauteile in gegurteter Form gebildet sind, und daß die Zuführungen für das wenigstens eine Montagewerkzeug (3) zugängliche Entnahmestationen bilden, an denen die Bauteile (14, 15, 16) nach dem Abtrennen vom Gurt jeweils bereitstehen.

10. Verfahren zum Steuern einer Vorrichtung nach einem der Ansprüche 1 -9, dadurch gekennzeichnet, daß zunächst mit einem von einer Steuereinrichtung (25) abgegebenen ersten Befehl oder einer ersten Gruppe von Befehlen eine in Parkstellung befindliche periphere Geräteeinheit (11a, 11b, 11c) aus dieser Parkstellung selbsttätig in die Arbeitsstellung bewegt und dort an die Montageeinheit (1) angekuppelt wird, daß anschließend mit einem zweiten Befehl bzw. mit einer zweiten Gruppe von Befehlen der Werkzeugträger (2) der Montageeinheit (1) so bewegt wird, daß er das mit der peripheren Geräteeinheit (11a, 11b, 11c) mit heranbewegte und dort auf der Aufnahme (24) befindliche wenigstens eine Montagewerkzeug (3) von dieser Aufnahme (24) entnimmt, und daß dann mit dritten von der Steuereinrichtung (25) abgegebenen Befehlen oder Gruppen von Befehlen das automatische Montieren der Werkstücke oder Werkstückteile unter Verwendung der an den Zuführungen bereitstehenden Bauteile (14, 15, 16) durch das wenigstens eine, am Werkzeugträger - (2) angekuppelte Montagewerkzeug (3) erfolgt, und daß vorzugsweise nach Beendigung der Montage einer bestimmten Anzahl von Werkstücken oder Werkstückteilen durch einen vierten Befehl oder eine Gruppe von vierten Befehlen der Steuereinrichtung (25) zunächst das wenigstens wine Montagewerkzeug (3) mit Hilfe des Werkzeugträgers (2) an die Aufnahme (24) der in Arbeitsstellung befindlichen peripheren Geräteeinheit (11a, 11b, 11c) zurückgegeben wird und dann durch einen fünften Befehl oder eine Gruppe von fücften Befehlen die periphere Geräteeinheit (11a, 11b, 11c) in eine Parkstellung zurückbewegt wird.

Fig.1

Fig.2

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| | **EINSCHLÄGIGE DOKUMENTE** | | EP 86110015.4 |
| P,X | DE - A1 - 3 413 255 (KRONE GMBH)<br>  * Gesamt *<br>  -- | 1-6,10 | B 23 P 21/00 |
| A | DD - A1 - 208 317 (MUELLER & FROMMHOLD)<br>  * Gesamt *<br>  -- | 1,2,4, 7,10 | |
| A | DE - A1 - 3 222 657 (SONY CORP.)<br>  * Gesamt *<br>  -- | 1,3,4, 7,8, 10 | |
| A | US - A - 3 968 559 (KARLSSON)<br>  * Spalte 2, Zeilen 52-54; Fig. 1,2 *<br>  -- | 7 | |
| A | DE - A1 - 3 033 686 (HITACHI LTD.)<br>  * Seiten 4-6,11,12,29,30; fig. 1,4,30 *<br>  -- | 1,8 | **RECHERCHIERTE SACHGEBIETE (Int. Cl.4)**<br><br>B 23 P 19/00<br>B 23 P 21/00 |
| A | EP - A2 - 0 076 231 (SCHÄFER)<br>  * Seite 6, Zeilen 1-7; Seite 8, Zeilen 2-8; Fig. 1,2 *<br>  ---- | 1,3,8 | B 23 P 23/00 |

Der vorliegende Recherchenbericht wurde für alle Patentansprüche erstellt.

| Recherchenort | Abschlußdatum der Recherche | Prüfer |
|---|---|---|
| WIEN | 21-10-1986 | TROJAN |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82